# EUROPEAN PATENT APPLICATION

(11) **EP 1 921 807 A1**
(43) Date of publication of application: **14.05.2008**
(21) Application number: 06023516.5
(22) Date of filing: 13.11.2006
(51) Int. Cl.: H04L 12/56

(54) **Method for forwarding MAC protocol data units in a mobile radio communication network, corresponding communication end point and relay station**

(71) Applicant: Alcatel Lucent, 75008 Paris (FR)
(72) Inventor: Fahldieck, Torsten, 71254 Ditzingen (DE)
(74) Representative: Wetzel, Emmanuelle

(57) **Abstract**

The present invention relates to a method for forwarding MAC protocol data units in a mobile radio communication network from a communication endpoint, herein called sender side, to a peer communication endpoint, herein called receiver side, at least one relay station being used on the path between said communication endpoints,.

According to the present invention, the method comprises the steps of:
- Extracting out of topology information available at said sender side at least one indicator describing the path between relay station and said receiver side,
- Including said indicator of the path between said relay station and said receiver side in said MAC protocol data unit in addition to an indicator of the path between said sender side and said relay station.

## Description

### BACKGROUND OF THE INVENTION

The present invention relates to a method for forwarding MAC protocol data units between communication end points over at least one relay station.

The context of this invention is multi hop communication networks as for example defined in IEEE standard 802.16j. In such networks, the coverage is increased by using relay stations as intermediate points in the communication paths between two communication end points on both sides of the air interface.

As in other communication networks, MAC protocol data units are exchanged between terminals and base stations for network access purpose. An appropriate adaptation should be found in case relay stations are positioned between the base stations and the terminals for guarantying a simple and efficient forwarding of the MAC protocol data units.

A straight forward solution for implementing the routing of the MAC protocol data units over the appropriate radio link paths including several relay stations could consist in managing routing or forwarding tables at the relay stations as for example is done in the different nodes of a fixed IP network. However, a specific requirement of multi hops communication networks consists in keeping the functionality of the relay stations as easy as possible in order to be able to use terminals as possible relay stations. Implementing management of routing tables at relay stations would mean a close follow up of the topology evolution of the network. In case of mobility, this would result in a huge amount of signalling between the different elements of the multi hop network impairing the efficiency of the network.

Consequently, a particular object of the present invention is to provide a routing mechanism at MAC protocol data unit level in multi-hops communication networks guarantying a simple structure and functionality of relay stations.

Another object of the invention is to provide a corresponding relay station and a corresponding communication end point of the network as e.g. terminal or base station.

### SUMMARY OF THE INVENTION

These objects, and others that appear below, are achieved by a method for forwarding MAC protocol data units in a mobile radio communication network according to claim 1, a communication end point according to claim 7, and a relay station according to claim 8.

For this purpose, the present invention foresees that the communication end point at the origin of the MAC protocol data unit, herein called sender side, gathers topology information necessary for determining the current topology of the network and determines in advance the path to be followed by the MAC protocol data unit. Then, the sender side generates a sequence of sub paths towards the receiver side, this sequence of sub paths is preferably represented by a sequence of communication indicators (CID). The indicator of the first sub path in the communication path is as usual stored in the appropriate field (e.g CID filed) of the MAC protocol data unit. The indicator(s) of the subsequent sub path(s) in the communication path is/are stored in a new sub header field which is sent together with the MAC protocol data unit according to the present invention.

According to the invention, the at least one relay station in the path between the sender side and the receiver side should modify the MAC protocol data unit thanks to the information contained in the sub header and send the modified MAC PDU to the next entity along the path.

In a preferred embodiment of the present invention, the relay station should keep the information of the previous sub paths in order for the receiver side to be able to reconstruct the feedback path to answer the MAC protocol data unit without gathering additional topology information.

The method according to the present invention presents the advantage to keep the functionality of the relay stations as easy as possible. The only modifications concern the internal functioning of the relay station but do not require further additional communication with other network entities. The relay stations do not have to maintain a forwarding or routing table for connection management since the complete connection path is transmitted in the message sub header.

This method further presents the advantage that under these conditions, simple terminals may get the role of relay stations if necessary.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a simplified structure of a multi hop communication network in which the method according to the present invention may be used;
- Figure 2a and 2b present the new MAC PDU structure as well as the impact of the different network element on the data stored in this structure.
- Figure 3a and 3b detail different steps of the method according to the present invention applied to the simplified structure of Fig 1.
- Figure 4 shows another scenario of multi hops communication.

### DETAILED DESCRIPTION OF THE INVENTION

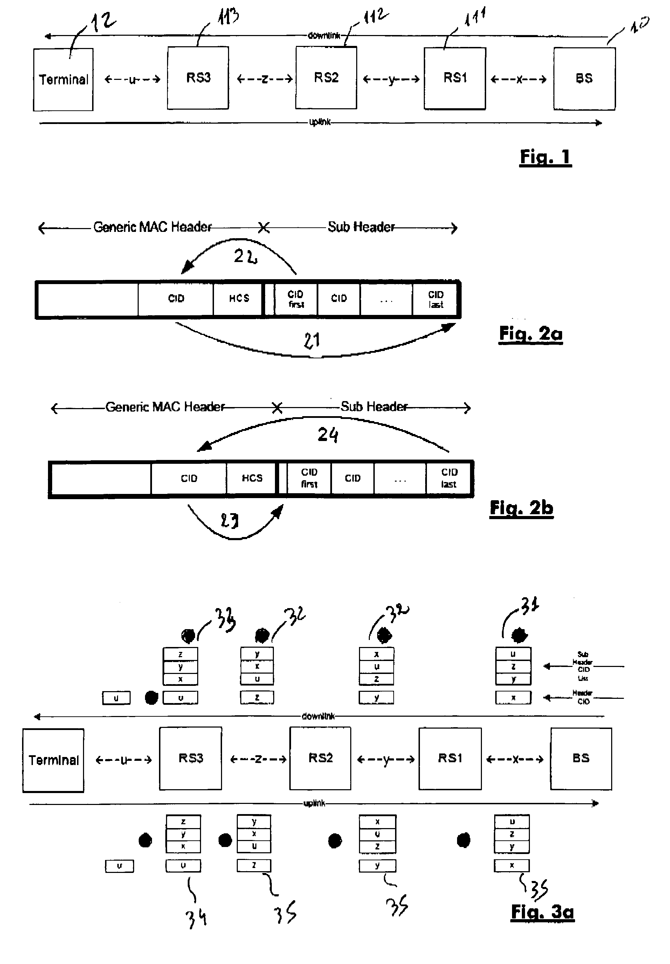

Figure 1 shows a simplified structure of a multi hops communication network in which the method according to the present invention may be used. The communication network comprises a base station 10, relay stations 111, 112, 113 and a terminal 12. The communication path between base station 10 and terminal 12 goes through relays stations 111, 112 and 113.

It will be clear for a person skilled in the art that this concrete example is chosen for the sake of simplicity and that the present invention may be used in any type of communication networks where at least one relay station is used. It is also applicable to hybrid communication networks, some part using multi hops relays and some other parts not.

According to the present invention, base station 10 maintains a database which describes the network topology between the connected relay stations 111,..., 113 and terminals 12. A way this network topology management is done is known in the art. Shortly, when a relay station or terminal enters the coverage area of a basestation or relay station, it performs a network entry procedure as defined in the 802.16 standards. During this network entry procedure, the basestation assigns management connections for maintaining the new network element. One or more relay stations may reside between the new network element and the basestation. In this case the network entry procedure is relayed via these intermediate relay stations. The connection relevant context from the network entry procedure is stored in a topology database in the basestation. A reverse mechanism is performed, if a terminal or relay station leaves the coverage area of a basestation It will be clear for persons skilled in the art that other network topology acquisition mechanisms may be used without departing from the scope of the present invention.

Base station 10 sends MAC PDUs (Medium Access Control Protocol Data Units destined to terminals 12 in order for enabling terminal 12 to access to the medium or not or for performing other MAC layer functionalities.

The path between the different elements of the communication network are univocally identified by connection identifiers CIDs. Since several logical management and data connections may exist between two elements of the communication network a MAC protocol data unit is unambiguous identified by its CID which is part of the message header.

The CID between base station 10 and relay station 111 is noted x, the CID between Relay station 111 and Relay station 112 is noted y, the CID between relay station 112 and relay station 113 is noted z and the CID between relay station 113 and terminal station 12 is noted u.

When base station 10 sends a MAC protocol data unit to a relay station 111, ..., 113 or terminal 12, it generates a message header and a CID list according to its topology database. The message header contains the CID of the connection to the next hop 111 as defined in IEEE 802.16e-2005, definition which is also applicable to IEEE 802.16 j.

Additionally and in case of downlink communication, the header of the MAC PDU is extended with a subheader, which contains a list of CID's of the connections to the further relay stations 112, 113 along the communication path and up to the final destination terminal 12.

Figure 2a and 2b present the MAC PDU structure according to the present invention as well as the actions of the different network elements on the data stored in this structure.

The MAC protocol data unit comprises a Generic MAC header portion and a sub header portion. The generic MAC header portion comprises the usual parameters defined in non multi hops communication networks (fields as for example CID of the path from base station 10 i.e CID of the first hop, Sequence Number, HCS...). The sub header portion comprises preferably a list of CID for the different sub paths to reach the receiver side. This CID list contains the CID of the sub path from relay station 111 to relay station 112, the CID of the sub path from relay station 112, to relay station 113 and the CID of the sub path between relay station 113 and terminal 12.

When the next hop 111 receives the MAC PDU, it identifies this PDU by a well known type identifier. To forward the PDU to the next hop 112, the CID's in the CID list together with the header CID are wrapped round as shown in figure 2a.

In a first step 21, the CID from the PDU header is appended at the end of the CID list. In a second step 22, the first CID in the list is removed from the list and inserted in the PDU header. This CID specifies the connection to the next hop 112 and the PDU can be send to this next hop 112. This mechanism has to be performed on every hop up to the last one 113.

In uplink direction, a reverse mechanism has to be performed as shown in figure 2b. When a MAC protocol data unit is received by a relay station 113, ..., 111, it prep ends the header CID at the begin of the list (step 23). The last CID from the CID list is removed from the list and inserted in the header (step 24). This CID now specifies the connection to the next hop 112 and the PDU can be send to the next hop 112.

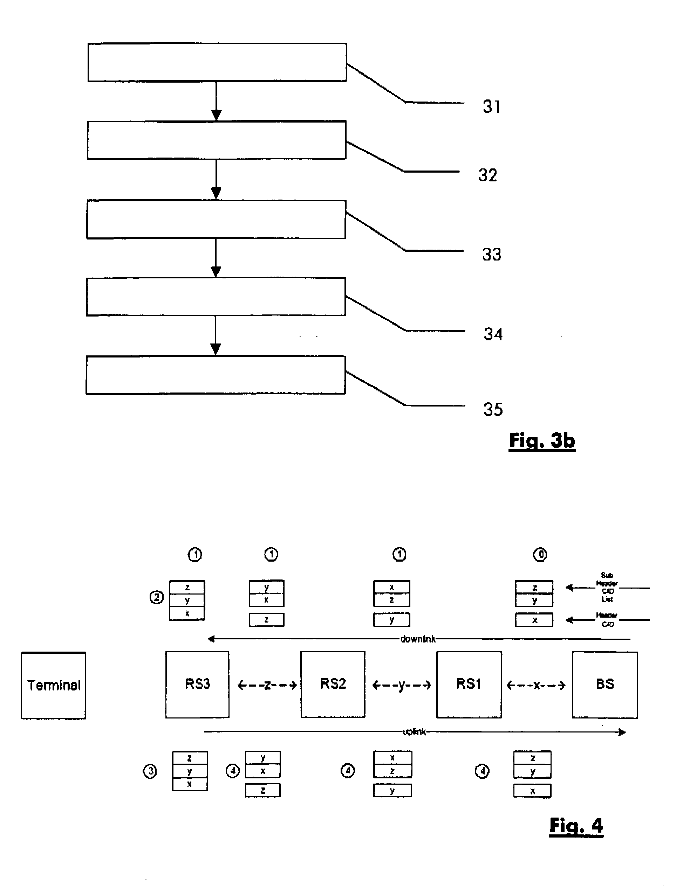

Figure 3a and 3b details different steps of the method according to the present invention applied to the simplified structure of Fig 1.

In step 31, base station 10 prepares the header and the sub header of the MAC PDU to be sent according to the topology database. The CID filed of the header comprises x : CID of the sub path toward relay station 111. The CID list in the sub header consist of y, z, u.

In step 32, relay station 111 receives the MAC PDU. It removes CID x from the header and appends it at then end of the received CID list. Simultaneously, the first entry of the received CID list is moved to the header port of the MAC PDU so that the CID of the MAC PDU as modified at relay 111 is y while the new CID list in the sub header is z,u,x.

This step is repeated each time the MAC PDU is received over on additional relay station which is not the last relay station before terminal 12.

In step 33, and in a preferred embodiment of the present invention the last relay station 113 before reaching the terminal has a specific role which consists in making the MAC PDU format backward compatible so that a terminal does not need to be specifically adapted to multi hops architecture and can transparently handle the MAC PDU data as if a single hop architecture were used. (This step is nevertheless not mandatory is terminals ore able to handle MAC PDU structures comprising a sub header as defined by the present invention.)

For this purpose, the last relay station 113 in downlink direction stores the received CID list. This list will be used later for MAC management connection in uplink direction. Moreover relay station removes the subheader containing the CID list from the MAC PDU. The PDU is then send as a 802.16 compliant (non multi hop) MAC protocol data unit to the terminal. This enables to fulfil the requirement of backward compatibility to 802.16e-2005 on the terminal side.

In step 34, a usual MAC PDU answer is received from terminal 12 at relay station 13.

Step 35 consists, when a MAC protocol data unit is received from a terminal in uplink direction, in that the first relay station 113 extends the protocol data unit coming from terminal 12 with a subheader containing a CID list, Preferably, the previously stored CID list is used for this purpose so that no relay station needs to perform topology checking. In this example, the CID list stored at relay station 113 is u, x,y,z.

Relay station 113 then performs the following actions..

Firstly it removes the CID field of the header and put it at the beginning of the CID list.

Secondly, it removes the last entry of the CID list and put it in the CID field of the new header.

Thirdly it append the CID list as sub header to the generic MAC PDU header.

In a preferred embodiment and additionally, to the described message header processing the subheader may contains a hop count and a list count. The list count defines the number of entries in the CID list, the hop defines the number of hops and is decremented on every hop.

Figure 4 shows another scenario of multi hop communication in which a base station to relay station communication takes place. In this case since no terminal is involved in the process, the process is simplified compared to the one presented on figure 3a in that the receiver side relay station only stores the CID list without any further action.

## Claims

1. Method for forwarding MAC protocol data units in a mobile radio communication network from a communication endpoint (10), herein called sender side, to a peer communication endpoint (12), herein called receiver side, at least one relay station (111, 112, 113) being used on the path between said communication endpoints (10, 12), said method comprising the steps of:
- Extracting out of topology information available at said sender side (10) at least one indicator describing the path between relay station (113) and said receiver side (12),
- Including said indicator of the path between said relay station (113) and said receiver side (12) in said MAC protocol data unit in addition to an indicator of the path between said sender side (10) and said relay station (111).

2. Method according to claim 1, wherein said indicator of the path between said relay station (113) and said receiver side (12) is contained in a sub-header of said MAC protocol data unit.

3. Method according to claim 1 further comprising the steps of:
- upon reception of said MAC protocol data units at said relay station (111, 112, 113), extracting said indicator of the path between said relay station (113) and said receiver side (12) and modifying the field of said MAC protocol data unit containing said indicator of the path between said sender side (10)and said relay station (111) accordingly.

4. Method according to claim 1, wherein upon reception of said MAC protocol data unit at said relay station (111, 112, 113) said indicator of the path from sender side (10) and relay station (111) is moved to said sub-header.

5. Method according to claim 1, wherein said indicator of the path between different elements of the radio communication network are connection indicators as defined in IEEE 802.16 standard family.

6. Method according to claim 1, **characterized in that** said communication endpoints are base stations, relay station or terminal stations.

7. Communication end-point (10), herein called sender side, of a radio communication network adapted to send MAC protocol data units to a peer communication end point (12), herein called receiver side, over at least one relay station (111, 112, 113), said communication end point (10) being **characterized in that** it comprises means for:
- Extracting out of topology information available at said sender side (10) at least one indicator describing the path between relay station (113) and said receiver side (12),
- Including said indicator of the path between said relay station (113) and said receiver side (12) in said MAC protocol data unit in addition to on indicator of the path between said sender side (10) and said relay station (111).

8. Relay station (111, 112, 113) able to be used in a radio communication network for forwarding MAC protocol data units from a one communication endpoint (10), herein called sender side, to a peer communication endpoint (12), herein called receiver side, said relay station (111, 112, 113) being **characterized in that** it comprises :
- means for extracting an indicator of the path between said relay station (113) and said receiver side (12) from an MAC protocol data unit sub header and modifying the field of said MAC protocol data unit containing an indicator of the next path accordingly;
- means for moving said previous indicator of the next path to said MAC protocol data unit sub-header.

9. Relay station (111, 112, 113) according to claim 8, further comprising:
- means for storing said indicator of the path between the sender side (10) and the relay station (111) and the indicator of the path between the relay station (113) and the receiver side (12) in a sorted list;
- means, for upon reception of a MAC PDU from said receiver side (12), including said indicator of the path between said relay station and said receiver side in said MAC protocol data unit in addition to an indicator of the path between said sender side (10) and said relay station (111).
